(19) Europäisches Patentamt
European Patent Office
Office européen des brevets

(11) **EP 2 722 855 A1**

(12) **EUROPEAN PATENT APPLICATION**

(43) Date of publication:
**23.04.2014 Bulletin 2014/17**

(51) Int Cl.:
*H01F 1/057* (2006.01)    *H02K 7/18* (2006.01)
*H01F 7/02* (2006.01)

(21) Application number: **12189269.9**

(22) Date of filing: **19.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventors:
• **Semmer, Silvio**
**7330 Brande (DK)**
• **Urda, Adriana Cristina**
**5230 Odense M (DK)**

(54) **Nd-Fe-B permanent magnet without Dysprosium, rotor assembly, electromechanical transducer, wind turbine**

(57)    It is described a Nd-Fe-B permanent magnet (354) comprising 28-34 weight % of rare earth elements, wherein the content of Dy is smaller than 0.1 weight % and wherein the Nd-Fe-B permanent magnet (354) has a spatial extension (h) parallel to a magnetization direction of the Nd-Fe-B permanent magnet (354) which is larger than 30 mm. It is further described a rotor assembly (350) for an electromechanical transducer (340), which rotor assembly (350) comprises at least one of such an Nd-Fe-B permanent magnet (354). Furthermore, it is described an electromechanical transducer (340) comprising such a rotor assembly (350) and a wind turbine (100) comprising such an electromechanical transducer (340).

FIG 3

EP 2 722 855 A1

**Description**

Field of invention

The present invention relates to the technical field of rare earth permanent magnets of the Nd-Fe-B type. The present invention further relates to a rotor assembly for an electromechanical transducer, which rotor assembly comprises at least one of such an Nd-Fe-B permanent magnet. Furthermore, the present invention relates to an electromechanical transducer comprising such a rotor assembly and to a wind turbine comprising such an electromechanical transducer.

Art Background

Electromechanical transducers are machines, which convert electrical energy into mechanical energy or vice versa. An electric motor is an electromechanical transducer that converts electrical energy into mechanical energy using magnetic field linkage. An electric generator is an electromechanical transducer that converts mechanical energy into electrical energy also using magnetic field linkage.

An electromechanical transducer comprises a stator and a rotor. The stator is an assembly, which represents the stationary part of an electromechanical transducer. The rotor is an assembly, which represents the moving part of an electromechanical transducer. The above mentioned magnetic field linkage couples the stator with the rotor.

In recent years, especially since the introduction of rare-earth magnetic materials, permanent magnet (PM) electromechanical transducers have become popular since they eliminate the need for commutators and brushes, which are commonly used with conventional Direct Current electromechanical transducer. The absence of an external electrical rotor excitation eliminates losses on the rotor side and makes PM electromechanical transducers more efficient. Further, the brushless design of a PM electromechanical transducer allows conductor coils to be located exclusively in the stationary stator. In this respect it is mentioned that non-PM electromechanical transducers, which are equipped with commutators and brushes, are susceptible to significantly higher maintenance costs.

PM electromechanical transducers are also known for their durability, controllability, and absence of electrical sparking. Thanks to their advantages PM electromechanical transducers are widely used in many applications such as electric vehicles (i.e. the electromechanical transducer is a motor) or in power generation systems (i.e. the electromechanical transducer is a generator) such as for instance in wind turbines. PM electromechanical transducers are used in particular in so called Direct Drive (DD) wind turbines, wherein the generator is directly connected via a main shaft to (a hub of) a rotor of the respective DD wind turbine.

Nowadays, highly efficient PM electromechanical transducers are often equipped with rare earth PM of the Nd-Fe-B type, which produce a strong magnetic field and which, as a consequence, guarantee for a strong magnetic field linkage between rotor and stator. This holds also for the generator of a modern wind turbine and in particular for the generator of a DD wind turbine. Therefore, for realizing a (direct drive) wind turbine generator with a permanent excited synchronous generator the PM material Nd-Fe-B is used.

In order to increase the ability of an Nd-Fe-B PM to resist against a demagnetization field it is known to add the element Dysprosium (Dy) to the magnet grade. In other words, by adding Dy the so called intrinsic coercivity HcJ of the Nd-Fe-B PM is increased.

Due to a high demand and poor resources the element Dy became quite expensive in recent time. At the moment the cost level of Dy is challenging in particular for producers of wind turbines. In addition all new mines which have opened worldwide cannot supply Dy. They can only supply the element Neodymium (Nd). Therefore, expert prediction is that in the next years with the increasing demand on Nd-Fe-B PM, the price for Dy will further increase and the price for Nd will most likely decrease.

A further increase in Dy prices would increase the PM cost for a direct drive generator and would result in a high overall cost of a wind turbine.

There may be a need for providing a Nd-Fe-B permanent magnet which despite of a small or even vanished content of Dy has a sufficiently high intrinsic coercivity HcJ such that the magnet can be used under temperature conditions which allow the use of the magnet for electric generators of wind turbines.

Summary of the Invention

This need may be met by the subject matter according to the independent claims. Advantageous embodiments of the present invention are described by the dependent claims.

According to a first aspect of the invention there is provided a Nd-Fe-B permanent magnet. The provided Nd-Fe-B permanent magnet comprises 28-34 weight % of rare earth elements, wherein the content of the rare earth element Dy is smaller than 0.1 weight %. Further, the Nd-Fe-B permanent magnet has a spatial extension parallel to a magnetization direction of the Nd-Fe-B permanent magnet which is larger than 30 mm.

The described Nd-Fe-B permanent magnet (PM) is based on the idea that by adapting the geometry of the PM towards a shape having at least a certain thickness parallel to the magnetization of the PM the content of the element Dy of the Nd-Fe-B PM can be significantly reduced while maintaining acceptable values for demagnetization. Hence, the described PM shows a sufficient ability to resist against a demagnetization field.

In other words, the inventors of the described Nd-Fe-B PM have found out that the geometry and in particular the geometric dimensions of a Nd-Fe-B PM has/have an impact on the ability to resist against a demagnetization. Specifically, the inventors found out that in order to have a sufficient high immunity or resistance against an unwanted demagnetization even when Dy is significantly reduced as compared to a known Nd-Fe-B PM the spatial dimension, e.g. the height, of the PM parallel to the magnetization direction of the PM must exceed a certain threshold value of 30 mm.

By reducing the amount of Dy (a known Nd-Fe-B PM being used for a wind turbine generator has a Dy content of e.g. up to 15 weight %) the overall cost of the PM can be reduced even though by increasing the height of the Nd-Fe-B PM the overall volume and also the overall mass of the PM magnet will be increased. This means that for realizing the described Nd-Fe-B PM a larger amount of Nd is necessary. However, in view of the large and expected further increase of the price for Dy and the comparatively small and expected further decrease of the price for Nd the described Nd-Fe-B PM may be produced much cheaper than a known Nd-Fe-B PM having a Dy content in the range of up to 15 weight %.

Apart from neodymium (Nd) the described rare earth elements may in particular include at least one or the following rare earth elements: Praseodymium (Pr), Gadolinium (Gd), Terbium (Tb) Dysprosium (Dy), Holmium (Ho).

According to a further embodiment of the invention the content of Dy is smaller than 0.01 weight %. This may provide the advantage that the content of Dy is even further reduced such that in view of the extreme high price for the element Dy the overall cost for realizing the described Nd-Fe-B PM can be further reduced.

It is mentioned that the described Nd-Fe-B PM can be realized even with a zero content of Dy, wherein unintentional impurities are not taken into account. Such impurities may be possible since due to its similar chemical behavior different rare earth element can typically not be separated with a reliability of 100%.

The relationship between (i) the height parallel to the magnetization direction of the PM and (ii) the intrinsic coercivity HcJ of the PM for a Nd-Fe-B PM having a zero content of Dy and a Nd-Fe-B PM having a certain weight content of Dy can be described by the following phenomenological equation (I):

$$\mathrm{HcJ(0\%Dy) \cdot h\_Mag(0\%Dy) \geq HcJ(x\%Dy) \cdot h\_Mag(x\%Dy) \qquad (I)}$$

Thereby, HcJ(0%Dy) is the magnetic intrinsic coercivity for a magnet grade of 0% Dy and a rated magnet temperature, which, depending on the specific cooling concept of the respective generator may be within the range of e.g. 50°C to 140°C. The term h_Mag(0%Dy) is the height of the PM containing no Dy parallel to its magnetization direction. Correspondingly, HcJ(x%Dy) is the magnetic intrinsic coercivity for a magnet grade having x% Dy and the same rated magnet temperature. Further, the term h_Mag(x%Dy) is the height of the PM containing Dy direction. Again, the height h_Mag(x%Dy) is measured parallel to the magnetization direction.

This means that the multiplication of the magnetic intrinsic coercivity HcJ with the magnet height h_Mag is a measure of the strength of the magnet as well as a measure against demagnetization. According to the embodiment described here this measure is for the bigger magnet with 0%Dy higher than for the lower magnet with a certain (x) weight % of the element Dy. Of course, this measure has to be higher at the maximum rated operational temperature of the respective magnet which for typical wind turbine generator applications is between e.g. 50°C to 140°C.

Descriptive speaking: Compared to known Nd-Fe-B PM the magnet height in magnetization direction is increased so that the resulting bigger PM with 0% Dy has the same behavior against demagnetization, e.g. in a generator short circuit case, at rated operational temperature as the known PM with a certain percentage amount of Dy.

According to a further embodiment of the invention the spatial extension parallel to the magnetization direction of the Nd-Fe-B permanent magnet is larger than 35 mm. This may provide the advantage that due to the increased height parallel to the magnetization direction the ability of the described PM to withstand an unwanted demagnetization is further increased.

According to a further embodiment of the invention a further spatial extension perpendicular to the magnetization direction of the Nd-Fe-B permanent magnet is at least 80 mm. This may provide the advantage that the described PM having an extreme small or even a zero content of Dy can be realized with geometrical dimensions which make the PM suitable for wind turbine generator applications.

Specifically, the described further spatial extension which may be called the width of the described PM is such that a magnet pole of the corresponding generator can consist of one or more PM pieces in a circumferential, radial and axial direction of the generator. In this respect it is mentioned that for a typical generator of a modern direct drive wind turbine the rotor assembly where the PM are mounted may have a diameter of about 3 to 8 m and a length of about 1 to 3 m. This results in a certain area A (= $2\pi \cdot$ diameter/2 $\cdot$ length) which has to be covered with an array of a plurality of PM.

According to a further embodiment of the invention the intrinsic coercivity HcJ of the Nd-Fe-B permanent magnet at a temperature of 20°C is less than 1200 kA/m and in particular less than 1000 kA/m.

According to a further embodiment of the invention the intrinsic coercivity HcJ of the Nd-Fe-B permanent magnet at a temperature of 60°C is less than 800 kA/m and in particular less than 600 kA/m.

In this respect it is mentioned that the described Nd-Fe-B PM having an extreme small or even a zero content of Dy differs from a known Nd-Fe-B PM having a certain Dy content by a smaller intrinsic coercivity HcJ. However, this smaller intrinsic coercivity HcJ is still large enough to use the described Nd-Fe-B PM for a rotor of a generator of a (direct drive) wind turbine.

According to a further aspect of the invention there is described a rotor assembly for an electromechanical transducer, in particular for a generator of a wind turbine. The described rotor assembly comprises (a) a support structure, and (b) at least one Nd-Fe-B permanent magnet as described above. The Nd-Fe-B permanent magnet is mounted to the support structure.

V: The described rotor assembly is based on the idea that with the above described Nd-Fe-B permanent magnet a rotor assembly for an electromechanical transducer can be built up, which despite of a small or even zero content of Dy allows for a reliable operation by avoiding an unwanted demagnetization of the Nd-Fe-B PM.

The mentioned support structure may be realized for instance by a so called rotor housing which, when being installed in a PM electromechanical transducer, is rotatable around a rotational axis of the PM electromechanical transducer.

According to a further aspect of the invention there is described an electromechanical transducer, in particular a generator of a wind turbine. The described electromechanical transducer comprises (a) a stator assembly, and (b) a rotor assembly as described above.

The described electromechanical transducer is based on the idea that with the above described rotor assembly one can design a PM electromechanical transducer wherein despite having only a reduced amount of Dy the ability to resist against a demagnetization field is sufficiently high such that a reliable operation of the electromechanical transducer can be ensured.

It is mentioned that the provided electromechanical transducer may be realized with different designs. A common design option is characterized by the matter of fact that the rotor assembly is located within the stator assembly. A less common design option is characterized by the matter of fact that the rotor assembly is located outside from the stator assembly. In the latter option during operation of the PM electromechanical transducer the magnetic flux interacting between the stator coils and the Nd-Fe-B magnet components may be directed radially outwards from the stator.

According to a further aspect of the invention there is provided a wind turbine for generating electrical power. The provided wind turbine comprises (a) a tower, (b) a rotor, which is arranged at a top portion of the tower and which comprises at least one blade, and (c) an electromechanical transducer as described above, wherein the electromechanical transducer is mechanically coupled with the rotor.

The described wind turbine is based on the idea that the above described electromechanical transducer representing a generator for the wind turbine may allow for realizing the wind turbine in a less expensive way because due to the defined geometric dimensions of the PM being used for the rotor assembly of the generator compared to known PM a large amount of the very expensive element Dy can be saved.

It has to be noted that embodiments of the invention have been described with reference to different subject matters. However, a person skilled in the art will gather from the above and the following description that, unless other notified, in addition to any combination of features belonging to one type of subject matter also any combination between features relating to different subject matters is considered as to be disclosed within this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawing

Figure 1 shows a wind turbine according to an embodiment of the present invention.

Figures 2 and 3 show a comparison between a known electromechanical transducer comprising a rotor assembly being equipped with Nd-Fe-B magnets having a certain content of Dy and an electromechanical transducer in accordance with an embodiment of the invention wherein Nd-Fe-B magnets are used which are free from Dy.

Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

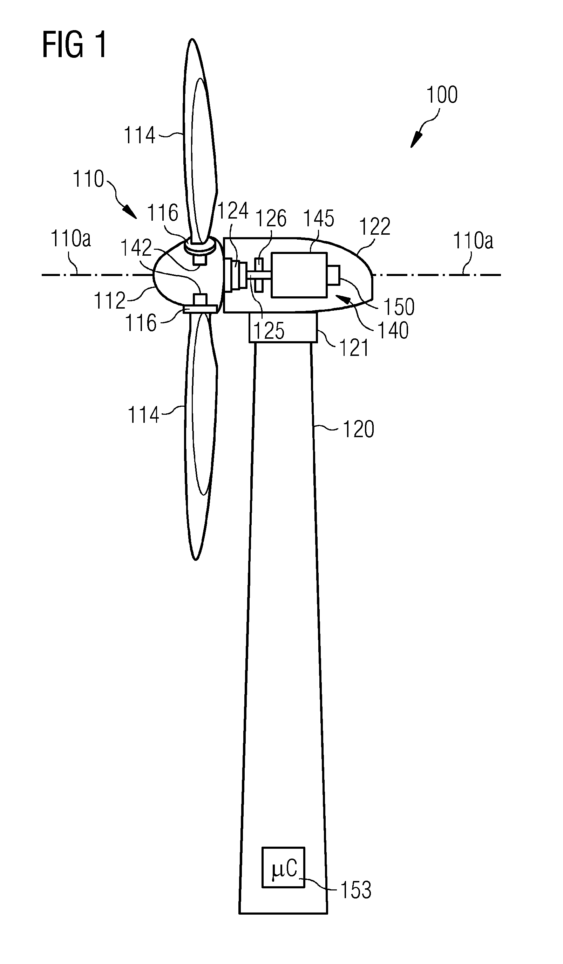

Figure 1 shows a wind turbine 100 according to an embodiment of the invention. The wind turbine 100 comprises a tower 120 which is mounted on a non-depicted fundament. On top of the tower 120 there is arranged a nacelle 122. In between the tower 120 and the nacelle 122 there is provided a yaw angle adjustment device 121 which is capable of rotating the nacelle 122 around a non depicted vertical axis being aligned with the longitudinal extension of the tower 120. By controlling the yaw angle adjustment device 121 in an appropriate manner it can be made sure that during a normal operation of the wind turbine 100 the nacelle 122 is always properly aligned with the current wind direction. However, the yaw angle adjustment device 121 can also be used to adjust the yaw angle to a position, wherein the nacelle 122 is intentionally not perfectly aligned with the current wind direction.

The wind turbine 100 further comprises a rotor 110 having three blades 114. In the perspective of Figure 1 only two blades 114 are visible. The rotor 110 is rotatable around a rotational axis 110a. The blades 114, which are mounted at a hub 112, extend radially with respect to the rotational axis 110a.

In between the hub 112 and a blade 114 there is respectively provided a blade adjustment device 116 in order to adjust the blade pitch angle of each blade 114 by rotating the respective blade 114 around a non depicted axis being aligned substantially parallel with the longitudinal extension of the respective blade 114. By controlling the blade adjustment device 116 the blade pitch angle of the respective blade 114 can be adjusted in such a manner that at least when the wind is not too strong a maximum wind power can be retrieved from the available wind power. However, the blade pitch angle can also be intentionally adjusted to a position, in which only a reduced wind power can be captured.

As can be seen from Figure 1, within the nacelle 122 there is provided a gear box 124. The gear box 124 is used to convert the number of revolutions of the rotor 110 into a higher number of revolutions of a shaft 125, which is coupled in a known manner to an electromechanical transducer 140. The electromechanical transducer is a generator 140.

At this point it is pointed out that the gear box 124 is optional and that the generator 140 may also be directly coupled to the rotor 110 by the shaft 125 without changing the numbers of revolutions. In this case the wind turbine is a so caller Direct Drive (DD) wind turbine.

Further, a brake 126 is provided in order to stop the operation of the wind turbine 100 or in order to reduce the rotational speed of the rotor 110 for instance (a) in case of an emergency, (b) in case of too strong wind conditions which might harm the wind turbine 100, and/or (c) in case of an intentional saving of the consumed fatigue life time and/or the fatigue life time consumption rate of at least one structural component of the wind turbine 100.

The wind turbine 100 further comprises a control system 153 for operating the wind turbine 100 in a highly efficient manner. Apart from controlling for instance the yaw angle adjustment device 121 the depicted control system 153 is also used for adjusting the blade pitch angle of the rotor blades 114 in an optimized manner.

In accordance with basic principles of electrical engineering the generator 140 comprises a stator assembly 145 and a rotor assembly 150. The stator assembly 145 comprises a plurality of not depicted coils for generating electrical current in response to a time alternating magnetic flux. The rotor assembly 150 comprises a plurality of Nd-Fe-B permanent magnet pieces which are arranged in an array being arranged around a curved surface area of the rotor assembly 150. In accordance with embodiments of the invention the Nd-Fe-B permanent magnet pieces do not contain the element Dy. In order to ensure that they nevertheless have a sufficient high intrinsic coercivity these Nd-Fe-B permanent magnet pieces have a comparatively large physical extension along a direction being parallel with the magnetization direction. Specifically, this physical extension, which in this document is also called the height of the PM pieces, is larger than 30 mm. Specifically, according to the concrete embodiment described here this height is approximately 37 mm.

It is mentioned that it is not necessary that the rotor assembly 150 is arranged within the stator assembly 145. It is rather also possible that the rotor assembly surrounds the stator assembly.

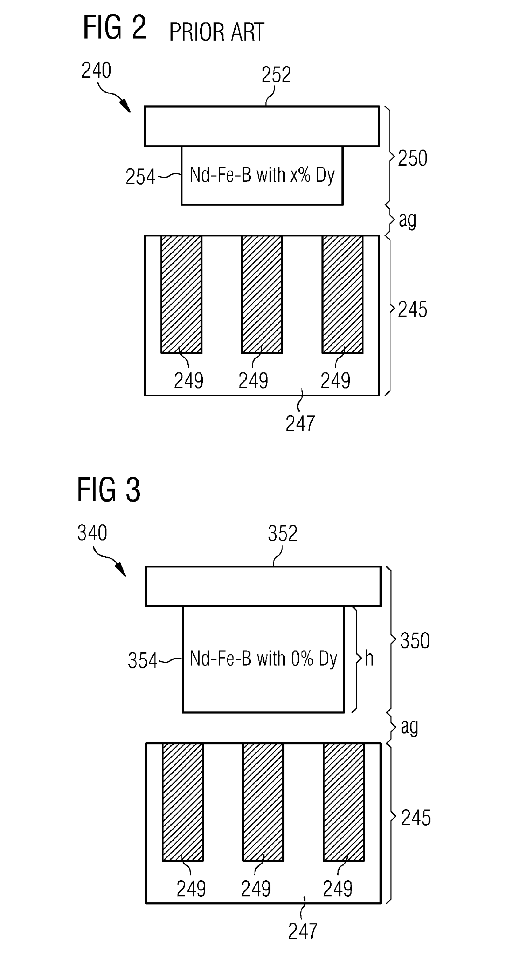

Figures 2 and 3 show in a cross sectional view a comparison between (a) a known electromechanical transducer 240 comprising a rotor assembly 250 being equipped with Nd-Fe-B magnet pieces 254 having a certain content of Dy and (b) an electromechanical transducer 340 in accordance with an embodiment of the invention wherein Nd-Fe-B magnet pieces 354 are used which have a composition being free from the (very expensive) element Dy.

Both the known electromechanical transducer 240 shown in Figure 2 and the electromechanical transducer 340 in accordance with an embodiment of the invention shown in Figure 3 have the same stator assembly 245. As can be seen from the Figures the stator assembly 245 has a stator support structure 247 comprising a stack of a plurality of lamination sheets and a plurality of stator windings 249 being accommodated within the stator support structure 247. The windings 249 are interconnected in a known manner by means of non depicted electrical connections.

The rotor assembly 250 of the known electromechanical transducer 240, which is separated from the stator assembly 245 by an air gap ag, comprises a rotor support structure 252 providing the mechanical base for mounting the Nd-Fe-B PM pieces 254. The support structure 252 comprises a magnetic material in order to optimize the magnetic field generated by the Nd-Fe-B PM piece 254 and other Nd-Fe-B PM pieces not shown in Figure 2. Thereby, in accordance with known principles in the design of electromechanical transducers the magnetic field is optimized in such a manner that the magnetic field linkage between the stator assembly 245 and the rotor assembly 250 is maximized.

A rotor assembly 350 of the electromechanical transducer 340 comprises a rotor support structure 352 providing the mechanical base for mounting the Nd-Fe-B PM pieces 354. Again, the support structure 352 comprises a magnetic material in order to optimize the magnetic field linkage between the stator assembly 245 and the rotor assembly 350.

According to the embodiment described here the air gap ag between the rotor assembly 350 and the stator assembly 245 can be used for guiding a cooling fluid through the electromechanical transducer 340 in order to remove waste heat which during operation is generated in particular by the stator coils 249 of the stator assembly 245.

It is mentioned that a plurality of PM pieces can be mounted to the support structure 352. The PM pieces are preferably arranged in a matrix like structure around a curved surface area of the support structure 352 having a basically cylindrical geometry. In Figure 3 for the sake of clarity only one PM piece 254 is depicted.

As can be seen from a comparison between the Figures 2 and 3, the height h of the Nd-Fe-B PM piece 354 with 0% Dy is approximately larger by a factor of two compared to the height of the Nd-Fe-B PM piece 254 with x% Dy. Thereby, the height which in Figures 2 and 3 extends along the vertical direction is oriented parallel to the magnetization direction of the Nd-Fe-B PM pieces 254, 354. By increasing the magnet height along the magnetization direction and by eliminating Dy from the magnets composition it is possible to keep the same or at least similar demagnetization properties as compared to the magnet with a smaller height and a certain content of Dy.

In other words, by changing both the composition and the size of the Nd-Fe-B PM the magnetic behavior can be kept at least approximately the same. When reducing the amount of Dy in the magnets composition the magnet height parallel to its magnetization direction has to be increased to end up with at least approximately the same magnet piece properties.

In view of the high price for the element Dy by reducing the amount of Dy the overall cost of the PM can be reduced even though by increasing the height of the Nd-Fe-B PM the overall volume and, as a consequence, also the overall mass of the PM magnet and the needed amount of Nd will be increased.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A Nd-Fe-B permanent magnet (354) comprising 28-34 weight % of rare earth elements, wherein the content of the rare earth element Dy is smaller than 0.1 weight %,
   wherein the Nd-Fe-B permanent magnet (354) has a spatial extension (h) parallel to a magnetization direction of the Nd-Fe-B permanent magnet (354) which is larger than 30 mm.

2. The Nd-Fe-B permanent magnet as set forth in the preceding claim, wherein
   the content of Dy is smaller than 0.01 weight %.

3. The Nd-Fe-B permanent magnet as set forth in any one of the preceding claims, wherein
   the spatial extension (h) parallel to the magnetization direction of the Nd-Fe-B permanent magnet (354) is larger than 35 mm.

4. The Nd-Fe-B permanent magnet as set forth in any one of the preceding claims, wherein
   a further spatial extension perpendicular to the magnetization direction of the Nd-Fe-B permanent magnet is at least 80 mm.

5. The Nd-Fe-B permanent magnet as set forth in any one of the preceding claims, wherein
   the intrinsic coercivity HcJ of the Nd-Fe-B permanent magnet (354) at a temperature of 20°C is less than 1200 kA/m and in particular less than 1000 kA/m.

6. The Nd-Fe-B permanent magnet as set forth in any one of the preceding claims, wherein
   the intrinsic coercivity HcJ of the Nd-Fe-B permanent magnet (354) at a temperature of 60°C is less than 800 kA/m and in particular less than 600 kA/m.

7. A rotor assembly for an electromechanical transducer (140, 340), in particular for a generator (140, 340) of a wind turbine (100), the rotor assembly (350) comprising
a support structure (352), and
at least one Nd-Fe-B permanent magnet (354) as set forth in any one of the preceding claims, wherein the Nd-Fe-B permanent magnet (354) is mounted to the support structure (352).

8. An electromechanical transducer, in particular a generator (140, 340) of a wind turbine (100), the electromechanical transducer (140, 340) comprising
a stator assembly (245), and
a rotor assembly (350) as set forth in the preceding claim.

9. A wind turbine for generating electrical power, the wind turbine (100) comprising
a tower (120),
a rotor (110), which is arranged at a top portion of the tower (120) and which comprises at least one blade (114), and an electromechanical transducer (140, 340) as set forth in the preceding claim, wherein the electromechanical transducer (140, 340) is mechanically coupled with the rotor.

FIG 1

FIG 2  PRIOR ART

240                        252

254 — | Nd-Fe-B with x% Dy |    250

ag

245

249   249   249

247

FIG 3

340                        352

354 — | Nd-Fe-B with 0% Dy |  h    350

ag

245

249   249   249

247

# EUROPEAN SEARCH REPORT

**Application Number**

EP 12 18 9269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 131 478 A1 (SHINETSU CHEMICAL CO [JP]) 9 December 2009 (2009-12-09) * paragraphs [0019], [0027], [0039], [0042]; claim 8; figures 3,11 * | 1-9 | INV. H01F1/057 H02K7/18 H01F7/02 |
| X | JP 2002 153036 A (SUMITOMO SPEC METALS) 24 May 2002 (2002-05-24) * paragraph [0040]; figures 1,2 * | 1-9 | |
| A | EP 1 830 451 A1 (HITACHI METALS LTD [JP]) 5 September 2007 (2007-09-05) * paragraph [0051] * | 1-9 | |

TECHNICAL FIELDS SEARCHED (IPC)

H01F
H02K

The present search report has been drawn up for all claims

| Place of search | Date of completion of the search | Examiner |
|---|---|---|
| The Hague | 28 January 2013 | Primus, Jean-Louis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**EP 2 722 855 A1**

## ANNEX TO THE EUROPEAN SEARCH REPORT
## ON EUROPEAN PATENT APPLICATION NO.

EP 12 18 9269

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2013

| Patent document cited in search report | | Publication date | Patent family member(s) | | Publication date |
|---|---|---|---|---|---|
| EP 2131478 | A1 | 09-12-2009 | EP 2131478 A1 | | 09-12-2009 |
| | | | JP 5060546 B2 | | 31-10-2012 |
| | | | KR 20090123903 A | | 02-12-2009 |
| | | | TW 200843293 A | | 01-11-2008 |
| | | | US 2008231132 A1 | | 25-09-2008 |
| | | | WO 2008117631 A1 | | 02-10-2008 |
| JP 2002153036 | A | 24-05-2002 | NONE | | |
| EP 1830451 | A1 | 05-09-2007 | EP 1830451 A1 | | 05-09-2007 |
| | | | KR 20070086385 A | | 27-08-2007 |
| | | | US 2008218007 A1 | | 11-09-2008 |
| | | | WO 2006064948 A1 | | 22-06-2006 |